# EUROPÄISCHE PATENTSCHRIFT

(11) **EP 2 424 048 B1**
(45) Veröffentlichungstag und Bekanntmachung des Hinweises auf die Patenterteilung: **17.01.2024**
(21) Anmeldenummer: 11171810.2
(22) Anmeldetag: 28.06.2011
(51) Int. Cl.: H01R 13/52, G02B 6/38

(54) **Verbindungsstecker und Verbindungseinrichtung zum Herstellen einer lösbaren Verbindung**
Connector and connecting device for forming a releasable connection
Fiche de connexion et dispositif de liaison pour la fabrication d'une liaison amovible

(30) Priorität: 24.08.2010 DE 102010039715
(43) Veröffentlichungstag der Anmeldung: 29.02.2012
(73) Patentinhaber: TELEGÄRTNER KARL GÄRTNER GMBH, 71144 Steinenbronn (DE)
(72) Erfinder: Lehmann, Falco, 70565 Stuttgart (DE); Pötschke, Uwe, 71111 Waldenbuch (DE); Wäller, Günter, 71336 Waiblingen (DE)
(74) Vertreter: Hoeger, Stellrecht & Partner Patentanwälte mbB

(56) Entgegenhaltungen:
- WO-A1-2005/122340
- DE-A1-102008 051 468
- US-A- 3 816 641
- US-A- 4 114 970
- US-A- 4 349 236
- US-A1- 2004 242 607
- US-B1- 7 507 105

## Beschreibung

Die Erfindung betrifft einen Verbindungsstecker mit den Merkmalen des Oberbegriffes von Patentanspruch 1.

Außerdem betrifft die Erfindung eine Verbindungseinrichtung mit einem derartigen Verbindungsstecker und einer korrespondierenden Verbindungsbuchse.

Lösbare signalleitende Verbindungen kommen beispielsweise in der Kommunikations- und Datentechnik zum Einsatz. Die signalleitende Verbindung kann als optische Verbindung oder auch in Form einer elektrischen Verbindung ausgestaltet sein.

Aus der WO 2008/128940 A1 ist ein Verbindungsstecker bekannt, mit dessen Hilfe eine optische Verbindung zwischen zwei Lichtwellenleitern hergestellt werden kann. Der Verbindungsstecker umfasst ein Steckergehäuse, in das das Endstück eines optischen Kabels eingeführt werden kann. Das optische Kabel weist eine oder mehrere Adern auf in Form von Lichtwellenleitern. An einen oder mehrere Lichtwellenleiter kann ein optisches Verbindungsmodul angeschlossen werden. Das Verbindungsmodul weist mindestens eine Ferrule auf, an der ein Lichtwellenleiter festgelegt werden kann. Der Verbindungsstecker kann in einen Aufnahmeschacht einer zugeordneten Verbindungsbuchse eingesteckt werden. Im Aufnahmeschacht ist ein Anschlussmodul angeordnet, das ebenfalls mindestens eine Ferrule aufweist mit einem daran festgelegten Lichtwellenleiter eines optischen Kabels. Nach dem Einführen des Verbindungssteckers in den Aufnahmeschacht der Verbindungsbuchse liegt die Ferrule des Verbindungsmoduls stirnseitig an einer Ferrule des Anschlussmoduls an. Dadurch ist eine signalleitende optische Verbindung hergestellt zwischen dem Verbindungsstecker und der Verbindungsbuchse. Der Verbindungsstecker ist auch mechanisch mit der Verbindungsbuchse verbunden. Hierzu weist das Steckergehäuse des Verbindungssteckers ein mechanisches Verbindungselement auf, das mit einem korrespondierenden mechanischen Verbindungselement eines Buchsengehäuses der Verbindungsbuchse zusammenwirkt. Dadurch kann die optische Verbindung zwischen den beiden Lichtwellenleitern vor störenden Umwelteinflüssen geschützt werden.

Derartige optische Verbindungsstecker können eine Schnittstelle ausbilden zwischen einem optischen Kabel und einer elektrooptischen Schaltungsanordnung, die einen elektrooptischen Wandler trägt. Mittels des elektrooptischen Wandlers lassen sich die über das Kabel übertragenen optischen Signale in elektrische Signale umwandeln, die anschließend verarbeitet werden können.

Der Schutz vor störenden Umwelteinflüssen ist nicht nur bei optischen Verbindungen von Bedeutung sondern auch bei elektrischen Verbindungen. In beiden Fällen ist es günstig, wenn zusätzlich zu einer signalleitenden Verbindung zwischen dem Verbindungsmodul des Verbindungssteckers und dem Anschlussmodul der Verbindungsbuchse eine mechanische Schutzvorrichtung zum Einsatz kommt in Form des Stecker- und des Buchsengehäuses, die mechanisch und günstigerweise auch spritzwasserdicht miteinander verbunden sind und die die signalleitend miteinander verbundenen Verbindungs- und Anschlussmodule umgeben.

In manchen Fällen gestaltet sich das Herstellen einer lösbaren Verbindung zwischen einem Verbindungsstecker und einer Verbindungsbuchse recht einfach, indem der Verbindungsstecker zusammen mit dem darin angeordneten Verbindungsmodul in den Aufnahmeschacht der Verbindungsbuchse eingeführt wird. Beim Einführen in den Schacht wird das Verbindungsmodul mit dem Anschlussmodul signalleitend verbunden. Hierfür ist es allerdings erforderlich, die Lage des Anschlussmoduls innerhalb des Aufnahmeschachts vorab festzulegen, beispielsweise durch geeignete internationale Normierungen der Verbindungsbuchse.

Schwieriger wird das Herstellen einer lösbaren Verbindung, wenn die Lage des Anschlussmoduls innerhalb des Aufnahmeschachtes nicht exakt vorgegeben ist. Hier besteht das Risiko, dass das Steckergehäuse korrekt in den Aufnahmeschacht eingeführt wird ohne dass gleichzeitig eine signalleitende Verbindung zwischen dem Verbindungsmodul und dem Anschlussmodul erzielt wird. Das Risiko besteht vor allem dann, wenn das Herstellen der Verbindung unter rauen Umgebungsbedingungen, insbesondere unter schwierigen Witterungsbedingungen zu erfolgen hat.

Verbindungsstecker mit den Merkmalen des Oberbegriffes von Patentanspruch 1 sind aus US 4 349 236 A, WO 2005/122340 A1, US 4 114 970 A und US 7 507 105 B1 bekannt.

Aus der DE 10 2008 051 468 A1 ist ein Verbindungsstecker bekannt, bei dem ein Verbindungsmodul in Form eines Steckerteils in Umfangsrichtung von einem Steckergehäuse umgeben ist, das ein erstes Gehäuseteil und ein zweites Gehäuseteil aufweist. Das erste Gehäuseteil wird durch Umspritzen des Steckerteils mit zwei Gehäuseabschnitten gebildet, die aus Kunststoffen unterschiedlicher Härte bestehen, und das zweite Gehäuseteil wird von einer Überwurfmutter gebildet, die relativ zum ersten Gehäuseteil in axialer Richtung bewegbar ist. Zwischen den beiden Gehäuseteilen ist ein erster Dichtring angeordnet. Das zweite Gehäuseteil in Form der Überwurfmutter umgibt einen vorderen Endabschnitt des ersten Gehäuseteils unter Ausbildung eines stirnseitig offenen Ringraums, in dem ein zweiter Dichtring angeordnet ist. Weitere Verbindungsstecker mit rückseitigem Kabeldichtungselement sind aus der US3816641 und der US2004242607 bekannt.

Aufgabe der vorliegenden Erfindung ist es, einen Verbindungsstecker und eine Verbindungseinrichtung der eingangs genannten Art derart weiterzubilden, dass auf einfache Weise auch unter rauen Umgebungsbedingungen zuverlässig eine Verbindung zwischen einem Verbindungsstecker und einer Verbindungsbuchse herstellbar ist, wobei das Eindringen von Spritzwasser in den Bereich zwischen dem Steckergehäuse und dem Buchsengehäuse vermieden wird.

Diese Aufgabe wird durch einen Verbindungsstecker mit den Merkmalen von Patentanspruch 1 gelöst.

Mittels des erfindungsgemäßen Verbindungssteckers kann auf einfache Weise eine mechanische und signalleitende Verbindung mit einer Verbindungsbuchse hergestellt werden. Ein Endstück eines Kabels mit mindestens einer Ader kann durch das Steckergehäuse und das an diesem angeordnete Dichtungselement hindurchgeführt werden. An die mindestens eine Ader kann zumindest ein Verbindungsmodul angeschlossen werden. Das Verbindungsmodul kann mit dem korrespondierenden Anschlussmodul signalleitend verbunden werden und das Steckergehäuse kann mit dem korrespondierenden Buchsengehäuse mechanisch verbunden werden, wobei das Dichtungselement gegen das Kabel gepresst wird und einen dichten Abschluss des Steckergehäuses ausbildet. Das Steckergehäuse weist hierzu ein erstes und ein zweites Gehäuseteil auf, die relativ zueinander bewegbar sind. Durch Bewegen des zweiten Gehäuseteils relativ zum ersten Gehäuseteil kann das Dichtungselement in Richtung auf die Mittelachse des Verbindungssteckers verformt werden. Dies hat zur Folge, dass durch die Relativbewegung des zweiten Gehäuseteils das Dichtungselement zwischen das Steckergehäuse und das Kabel eingepresst wird. Dadurch bildet das Dichtungselement einen spritzwasserdichten Abschluss des Steckergehäuses.

In einer ersten Stellung kann das zweite Gehäuseteil das Dichtungselement so weit freigeben, dass es zusammen mit dem Steckergehäuse entlang des Kabels verschoben werden kann. Wird das zweite Gehäuseteil in seine zweite Stellung bewegt, so wird das Dichtungselement in Richtung auf die Mittelachse des Verbindungssteckers verformt, d. h. das Dichtungselement wird gegen das Kabel gepresst und dichtet dadurch das Steckergehäuse rückwärtig ab. Durch Bewegen des zweiten Gehäuseteils wieder zurück in seine erste Stellung kann das Dichtungselement wieder so weit freigegeben werden, dass das Steckergehäuse zusammen mit dem Dichtungselement erneut entlang des Kabels verschoben werden kann. Dies gibt die Möglichkeit, dem Monteur einen freien Zugang zum Verbindungsmodul bereitzustellen, so dass er dieses auf einfache Weise signalleitend mit dem korrespondierenden Anschlussmodul der Verbindungsbuchse verbinden und bei Bedarf auch wieder vom Anschlussmodul trennen kann.

Bei der erfindungsgemäßen Ausgestaltung umgibt das zweite Gehäuseteil das erste Gehäuseteil in Umfangsrichtung unter Ausbildung eines stirnseitig offenen Ringraumes, in dem ein Dichtring angeordnet ist. Der Ringraum gibt die Möglichkeit, beim Herstellen der mechanischen Verbindung zwischen dem Steckergehäuse und dem Buchsengehäuse ein Anschlussteil des Buchsengehäuses in den Ringraum einzuführen unter Zwischenlage des Dichtringes. Dadurch wird auf konstruktiv einfache Weise das Eindringen von Spritzwasser in den Bereich zwischen dem Steckergehäuse und dem Buchsengehäuse vermieden.

Das Dichtungselement umfasst eine Mantelfläche mit einem ersten und einem zweiten Mantelflächenabschnitt, wobei an den Mantelflächenabschnitten jeweils ein Gehäuseteil anliegt. Das erste Gehäuseteil und das zweite Gehäuseteil umgeben bei einer derartigen Ausgestaltung jeweils einen Abschnitt der Mantelfläche des Dichtungselements.

Bevorzugt ist das Dichtungselement durch Bewegen des zweiten Gehäuseteils relativ zum ersten Gehäuseteil in radialer Richtung formbar. Das Dichtungselement kann somit in radialer Richtung zwischen das Steckergehäuse und das Kabel eingepresst werden.

Alternativ oder ergänzend kann vorgesehen sein, dass das Dichtungselement durch Bewegen des zweiten Gehäuseteils relativ zum ersten Gehäuseteil in axialer Richtung verformbar ist. Beispielsweise kann das Dichtungselement zwischen das erste Gehäuseteil und das zweite Gehäuseteil einpressbar sein, indem das zweite Gehäuseteil ausgehend von einer ersten Stellung in eine zweite Stellung bewegt wird. Das axiale Verformen des Dichtungselementes kann zur Folge haben, dass sich dieses auch in Richtung der Mittelachse des Verbindungssteckers verformt, um die auf das Dichtungselement einwirkende Belastung zu reduzieren.

Bei einer konstruktiv einfachen Ausgestaltung des erfindungsgemäßen Verbindungssteckers ist das Dichtungselement am ersten Gehäuseteil festgelegt. Hierbei ist es günstig, wenn das Dichtungselement in einen Endabschnitt des ersten Gehäuseteils eintaucht.

Es kann vorgesehen sein, dass das zweite Gehäuseteil relativ zum ersten Gehäuseteil um die Mittelachse des Verbindungssteckers verdrehbar ist.

Bei einer vorteilhaften Ausführungsform ist das zweite Gehäuseteil relativ zum ersten Gehäuseteil axial verschiebbar. Das erste Gehäuseteil kann hierzu eine Führung für das zweite Gehäuseteil ausbilden.

Besonders günstig ist es, wenn das erste Gehäuseteil einen Einführabschnitt aufweist, der in einen Aufnahmeschacht des Buchsengehäuses einführbar ist, und wenn das zweite Gehäuseteil beim Einführen des Einführabschnitts in den Aufnahmeschacht relativ zum ersten Gehäuseteil bewegbar, insbesondere axial verschiebbar ist. Dadurch kann das Dichtungselement auf einfache Weise bei der Herstellung der mechanischen Verbindung zwischen dem Steckergehäuse und dem Buchsengehäuse zwischen das Steckergehäuse und das Kabel eingepresst werden.

Das erste Gehäuseteil weist günstigerweise einen Anschlag auf zur Begrenzung der Bewegung des zweiten Gehäuseteils relativ zum ersten Gehäuseteil. Ausgehend von einer zum Anschlag beabstandeten ersten Stellung kann das zweite Gehäuseteil bei einer derartigen Ausführungsform in eine zweite Stellung bewegt werden, in der es am Anschlag des ersten Gehäuseteils anliegt.

Besonders vorteilhaft ist es, wenn das zweite Gehäuseteil in axialer Richtung gegen den Anschlag des ersten Gehäuseteils bewegbar ist.

Bei einer vorteilhaften Ausführungsform des erfindungsgemäßen Verbindungssteckers ist das Dichtungselement als elastisch verformbare Dichthülse ausgestaltet, durch die ein Endstück des Kabels hindurchführbar ist und die am ersten Gehäuseteil und am zweiten Gehäuseteil anliegt. Die gleichzeitige Anlage der Dichthülse am ersten Gehäuseteil und am zweiten Gehäuseteil ermöglicht es, die Dichthülse auf einfache Weise zu verformen, indem das zweite Gehäuseteil relativ zum ersten Gehäuseteil bewegt wird. Die Dichthülse kann das Kabel in Umfangsrichtung umgeben. Wird das zweite Gehäuseteil in Richtung auf das erste Gehäuseteil bewegt, so kann die Dichthülse zwischen das Steckergehäuse und das Kabel eingepresst werden.

Das Dichtungselement weist bei einer vorteilhaften Ausführungsform eine erste und eine zweite Endfläche auf, wobei an den Endflächen jeweils ein Gehäuseteil anliegt. Dies ist insbesondere dann von Vorteil, wenn das zweite Gehäuseteil in axialer Richtung relativ zum ersten Gehäuseteil bewegt werden kann, denn dadurch kann das Dichtungselement in axialer Richtung mit einem Druck beaufschlagt werden, unter dessen Wirkung es sich in Richtung auf die Mittellinie des Verbindungssteckers, d. h. in Richtung auf das Kabel verformt.

Wie bereits erwähnt, ist es von Vorteil, wenn das erste Gehäuseteil einen in einen Aufnahmeschacht der Verbindungsbuchse einführbaren Einführabschnitt aufweist. Der Einführabschnitt umfasst günstigerweise einen Anschlag zum Begrenzen der Einführbewegung des Einführabschnitts in den Aufnahmeschacht. Der Einführabschnitt bildet bei einer derartigen Ausgestaltung einen Tiefenanschlag aus, der mit einem zugeordneten Anschlagelement der Verbindungsbuchse zusammenwirkt und sicherstellt, dass beim Einführen des Einführabschnitts in den Aufnahmeschacht das Verbindungsmodul axial nicht mit unzulässig hohen Kräften beaufschlagt wird.

Günstigerweise ist der Einführabschnitt hülsenförmig ausgestaltet. Beispielsweise kann vorgesehen sein, dass der Einführabschnitt als Kreiszylindermantel ausgebildet ist. Bei hülsenförmiger Ausgestaltung umgibt der Einführabschnitt zumindest einen Teilbereich des Verbindungsmoduls in Umfangsrichtung und schützt diesen vor Beeinträchtigungen.

Bevorzugt weist der zweite Gehäuseteil dem Ringraum zugewandt ein mechanisches Verbindungselement auf zum Herstellen einer mechanischen Verbindung mit der Verbindungsbuchse. Das Verbindungselement kann beispielsweise in Form eines Innengewindes ausgestaltet sein, das auf ein Außengewinde eines Anschlussteils der Verbindungsbuchse aufgeschraubt werden kann.

Das Herstellen der mechanischen Verbindung zwischen dem Verbindungsstecker und der Verbindungsbuchse muss jedoch nicht zwingend mittels einer Schraubverbindung erfolgen. Es kann beispielsweise auch eine Bajonettverbindung zum Einsatz kommen oder eine so genannte "Push-Pull-Verbindung", wie sie dem Fachmann an sich bekannt ist.

Die Erfindung betrifft auch eine Verbindungseinrichtung mit einem Verbindungsstecker der voranstehend genannten Art und mit einer Verbindungsbuchse, die ein Buchsengehäuse mit einem Aufnahmeschacht aufweist, in dem ein komplementär zum Verbindungsmodul ausgestaltetes Anschlussmodul angeordnet ist. Die Verbindungseinrichtung zeichnet sich dadurch aus, dass das Verbindungsmodul formschlüssig mit dem Anschlussmodul verbindbar ist, wobei ein stirnseitiger Einführabschnitt des ersten Gehäuseteils des Verbindungssteckers in den Aufnahmeschacht einführbar und das zweite Gehäuseteil relativ zum ersten Gehäuseteil bewegbar und mit dem Buchsengehäuse mechanisch verbindbar ist unter gleichzeitigem Einpressen der Dichtungselements zwischen das Steckergehäuse und das Kabel.

Das zweite Gehäuseteil des Steckergehäuses kann relativ zum ersten Gehäuseteil zwischen einer ersten Stellung und einer zweiten Stellung hin und her bewegt werden. In der ersten Stellung des zweiten Gehäuseteils ist das Steckergehäuse zusammen mit dem Dichtungselement entlang des Kabels verschiebbar. Das erste Gehäuseteil umfasst stirnseitig einen Einführabschnitt, der in den Aufnahmeschacht der Verbindungsbuchse eingeführt werden kann. Während oder nach dem Einführen des Einführabschnitts in den Aufnahmeschacht ist das zweite Gehäuseteil relativ zum ersten Gehäuseteil bewegbar und es ist mit dem Buchsengehäuse mechanisch verbindbar, wobei das Dichtungselement zwischen das Steckergehäuse und das Kabel einpressbar ist.

Die erfindungsgemäße Verbindungseinrichtung erlaubt die Herstellung einer signalleitenden Verbindung auch unter rauen Umgebungsbedingungen, ohne dass es erforderlich ist, die Lage des Anschlussmoduls innerhalb des Buchsengehäuses exakt vorzugeben. Vielmehr kann der Monteur zunächst eine signalleitende Verbindung zwischen dem Verbindungsmodul und dem Anschlussmodul herstellen, wobei er das Steckergehäuse zusammen mit dem ersten Dichtungselement entlang des Kabels so weit nach hinten, d. h. in die dem Buchsengehäuse abgewandte Richtung verschieben kann, bis das Verbindungsmodul gut zugänglich und unter Herstellung eines Formschlusses mit dem Anschlussmodul verbunden werden kann. Anschließend kann dann das Steckergehäuse zusammen mit dem ersten Dichtungselement in Richtung auf das Buchsengehäuse verschoben werden. Das Verbindungsmodul taucht dadurch zumindest teilweise in das Steckergehäuse ein und das zweite Gehäuseteil des Steckergehäuses kann mit dem Buchsengehäuse mechanisch verbunden werden. Hierzu kann beispielsweise eine Schraubverbindung, eine Bajonettverbindung oder eine Push-Pull-Verbindung zum Einsatz kommen. Solange das Steckergehäuse zusammen mit dem ersten Dichtungselement entlang des Kabels verschoben werden soll, kann das zweite Gehäuseteil des Verbindungssteckers seine erste Stellung relativ zum ersten Gehäuseteil einnehmen. Soll das Steckergehäuse relativ zum Kabel fixiert werden, so kann das zweite Gehäuseteil in seine zweite Stellung bewegt werden, in der das Dichtungselement zwischen das Steckergehäuse und das Kabel eingepresst werden kann. Dadurch wird zum einen das Steckergehäuse relativ zum Kabel festgelegt und zum anderen wird dadurch das Eindringen von Spritzwasser in das Steckergehäuse verhindert.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer erfindungsgemäßen Verbindungseinrichtung mit einem erfindungsgemäßen Verbindungsstecker und einer zugeordneten Verbindungsbuchse im getrennten Zustand;
- Figur 2:: eine perspektivische Darstellung der Verbindungseinrichtung aus Figur 1 nach Herstellen einer Verbindung zwischen dem Verbindungsstecker und der Verbindungsbuchse;
- Figur 3:: eine Seitenansicht des Verbindungssteckers aus Figur 1, wobei ein Steckergehäuse entlang eines Kabels nach hinten verschoben ist;
- Figur 4:: eine Längsschnittansicht des Verbindungssteckers aus Figur 3;
- Figur 5:: eine Seitenansicht des Verbindungssteckers aus Figur 1, wobei das Steckergehäuse entlang des Kabels nach vorne verschoben ist, und
- Figur 6:: eine Schnittansicht des Verbindungssteckers aus Figur 5.

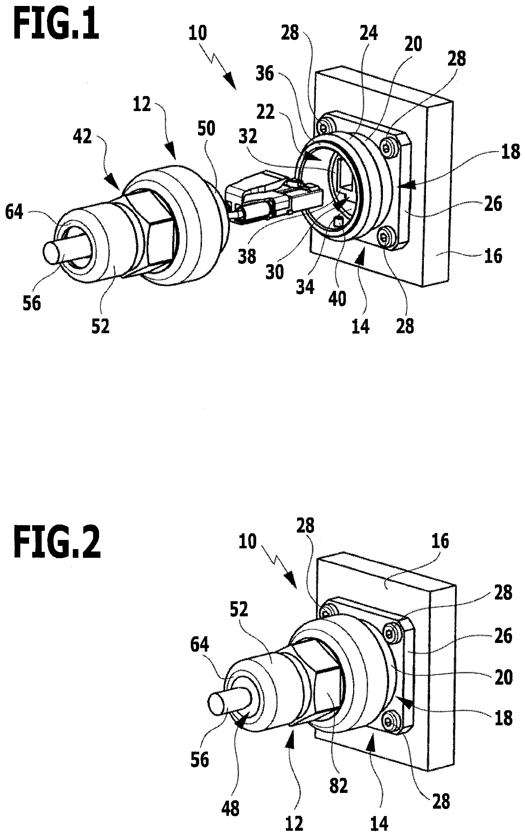

In den Figuren 1 und 2 ist als Beispiel einer erfindungsgemäßen Verbindungseinrichtung eine optische Verbindungseinrichtung 10 dargestellt mit einem Verbindungsstecker 12 und einer zugeordneten Verbindungsbuchse 14. Die Verbindungsbuchse 14 ist im dargestellten Ausführungsbeispiel an einer Gehäusewand 16 festgelegt. Die Gehäusewand 16 kann beispielsweise einen Teil eines in der Zeichnung nicht dargestellten Gehäuses einer Schaltungseinrichtung bilden, die beispielsweise an einer an einem Sendemast gehaltenen Mobilfunkantenne positioniert sein kann. Über die Verbindungseinrichtung 10 können der Schaltungseinrichtung Kommunikationssignale zugeführt werden, und es können von der Schaltungseinrichtung Kommunikationssignale abgeführt werden.

Die Verbindungsbuchse 14 umfasst ein Buchsengehäuse 18 mit einer nach Art einer Hülse ausgebildeten Schachtwand 20, die einen Aufnahmeschacht 22 umgibt und ein in Figur 1 schematisch dargestelltes Außengewinde 24 trägt. Die Schachtwand 20 ist einstückig mit einem Flansch 26 verbunden, der mittels Verbindungsschrauben 28 an der Gehäusewand 16 gehalten ist unter Zwischenlage eines in der Zeichnung nicht dargestellten Dichtringes.

Die kreiszylindrische Schachtwand 20 umgibt ein Anschlussmodul 30, wobei sich zwischen der Schachtwand 20 und dem Anschlussmodul 30 ein erster Ringraum 32 erstreckt.

Das Anschlussmodul 30 ragt von einem Schachtboden 34 des Aufnahmeschachtes 22 in Richtung des Verbindungssteckers 12 hervor. Im Bereich zwischen einer Stirnkante 36 der Schachtwand 20 und einer Endfläche 38 des Anschlussmoduls 30 ragt in den Aufnahmeschacht 22 in radialer Richtung ein an der Innenseite der Schachtwand 20 gehaltener Führungsstift 40 hinein.

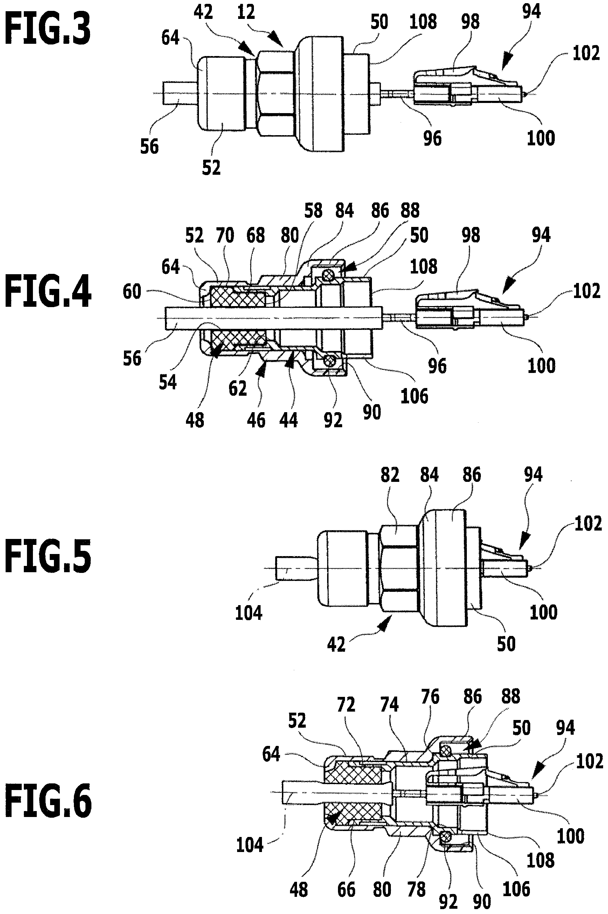

Der konstruktive Aufbau des Verbindungssteckers 12 wird insbesondere aus den Figuren 3 bis 6 deutlich. Der Verbindungsstecker 12 umfasst ein Steckergehäuse 42 mit einem ersten Gehäuseteil 44 und einem zweiten Gehäuseteil 46. Außerdem weist der Verbindungsstecker 12 ein Dichtungselement auf, das im dargestellten Ausführungsbeispiel als elastisch verformbare Dichthülse 48 ausgebildet ist. Das erste Gehäuseteil 44 ist ebenso wie das zweite Gehäuseteil 46 nach Art einer Hülse ausgebildet. Hierbei ragt das erste Gehäuseteil 44 mit einem kreiszylindrischen Einführabschnitt 50 in Richtung auf die Verbindungsbuchse 14 über das zweite Gehäuseteil 46 hervor. Das zweite Gehäuseteil 46 überragt mit einem Endabschnitt 52 das erste Gehäuseteil 44 in der der Verbindungsbuchse 14 abgewandten Richtung.

Die Dichthülse 48 umfasst einen zentralen Durchgang 54, durch den ein Endstück eines Kabels 56 hindurchgeführt ist. Der zentrale Durchgang 54 erstreckt sich von einer der Verbindungsbuchse 14 zugewandten vorderen Endfläche 58 der Dichthülse 48 bis zu einer der Verbindungsbuchse 14 abgewandten hinteren Endfläche 60. Die vordere Endfläche 58 liegt an einer Innenschulter 62 des ersten Gehäuseteils 44 an und die hintere Endfläche 60 liegt an einem radial nach innen weisenden Innenrand 64 des zweiten Gehäuseteils 46 an.

Außenseitig weist die Dichthülse 48 eine Mantelfläche 66 auf mit einem der Verbindungsbuchse 14 zugewandten ersten Mantelflächenabschnitt 48, der über eine nach außen weisende Stufe in einen der Verbindungsbuchse 14 abgewandten zweiten Mantelflächenabschnitt 70 übergeht. Der erste Mantelflächenabschnitt 48 ist von einem Endabschnitt 72 des ersten Gehäuseteils 44 umgeben und der zweite Mantelflächenabschnitt 70 ist vom Endabschnitt 52 des zweiten Gehäuseteils 46 umgeben.

An den Endabschnitt 72 des ersten Gehäuseteils 44 schließt sich in Richtung auf die Verbindungsbuchse 14 ein Mittelabschnitt 74 an, an den sich über eine radial nach außen weisende Stufe 76 ein Kragen 78 anschließt, der den kreiszylindrischen Einführabschnitt 50 trägt.

An den Endabschnitt 52 des zweiten Gehäuseteils 46 schließt sich in Richtung auf die Verbindungsbuchse 14 ein Halteabschnitt 80 an, der außenseitig einen Sechskant 82 ausbildet. An den Halteabschnitt 80 schließt sich über eine Erweiterung 84 ein Verbindungsabschnitt 86 an, der das erste Gehäuseteil 44 unter Ausbildung eines stirnseitig offenen zweiten Ringraumes 88 umgibt und ein Innengewinde 90 trägt. Innerhalb des zweiten Ringraumes 88 ist der Kragen 78 des zweiten Gehäuseteils 46 von einem Dichtring 92 umgeben.

Zusätzlich zum Steckergehäuse 42 und zur Dichthülse 48 weist der Verbindungsstecker 12 ein Verbindungsmodul 94 auf, das im dargestellten Ausführungsbeispiel an eine freigelegte Ader 96 des Kabels 56 angeschlossen ist. Das Verbindungsmodul 94 weist außenseitig einen Rastflügel 98 auf. Ein der Verbindungsbuchse 14 zugewandter vorderer Endbereich des Verbindungsmoduls 94 ist als Anschlussabschnitt 100 ausgebildet. Im dargestellten Ausführungsbeispiel umfasst der Anschlussabschnitt 100 eine Ferrule 102, die am freien Ende der Ader 96 angeordnet ist. Die Ader 96 umgibt im dargestellten Ausführungsbeispiel einen Lichtwellenleiter, über den ein optisches Signal übertragen werden kann. Alternativ könnte die Ader 96 einen elektrischen Leiter umgeben, über den ein elektrisches Signal übertragen werden kann. Das Verbindungsmodul 94 könnte dann zur Übertragung elektrischer Signale ausgestaltet sein, indem das Anschlusselement 100 in an sich bekannter Weise ein elektrisches Kontaktelement trägt, das an den elektrischen Leiter der Ader 96 angeschlossen ist.

Das zweite Gehäuseteil 46 kann relativ zum ersten Gehäuseteil 44 zwischen einer ersten, in den Figuren 3 und 4 dargestellten Stellung und einer zweiten, in den Figuren 5 und 6 dargestellten Stellung hin und her bewegt werden. Im dargestellten Ausführungsbeispiel kann das zweite Gehäuseteil 46 entlang des ersten Gehäuseteils 44 in axialer Richtung, d. h. entlang der Mittelachse 104 des Verbindungssteckers 12, hin und her verschoben werden. Wird das zweite Gehäuseteil 46 aus der ersten in die zweite Stellung verschoben, so wird dadurch die formelastische Dichthülse 48 in Richtung auf die Mittelachse 104 verformt. Umgekehrt entspannt sich die formelastische Dichthülse 48, wenn das zweite Gehäuseteil 46 in seine erste Stellung bewegt wird.

In der ersten Stellung des zweiten Gehäuseteiles 46 kann das Steckergehäuse 42 zusammen mit der Dichthülse 48 entlang des Kabels 46 nach hinten, also in die der Verbindungsbuchse 14 abgewandte Richtung verschoben werden, so dass das Verbindungsmodul 94 an die Ader 96 angeschlossen werden kann. Das Verbindungsmodul 94 ist hierbei für den Monteur gut zugänglich. Das Verbindungsmodul kann dann formschlüssig mit dem Anschlussmodul 30 der Verbindungsbuchse 14 verbunden werden. Hierbei kann der Rastflügel 98 des Verbindungsmoduls 94 mit einem korrespondierenden Rastelement des Anschlussmoduls 30 verrastet werden. In einem nachfolgenden Verfahrensschritt kann dann das Steckergehäuse 42 zusammen mit der Dichthülse 48 entlang des Kabels 56 soweit nach vorne, also in Richtung auf die Verbindungsbuchse 14 verschoben werden, bis der Einführabschnitt 50 des ersten Gehäuseteils 44 in den Aufnahmeschacht 22 der Verbindungsbuchse 14 eintaucht. Der Einführabschnitt 50 weist einen Längsschlitz 106 auf, der beim Einsetzen des Einführabschnitts 50 in den Aufnahmeschacht 22 den Führungsstift 40 aufnimmt. Der Einführabschnitt 50 kann so weit in den Aufnahmeschacht 22 eingesetzt werden, bis eine Stirnkante 108 des Einführabschnitts 50 am Schachtboden 34 des Aufnahmeschachts 22 anschlägt. Die Stirnkante 108 des Einführabschnitts 50 bildet somit einen Anschlag aus, der die Einführbewegung des Einführabschnitts 50 in den Aufnahmeschacht 22 begrenzt.

Beim Einsetzen des Einführabschnitts 50 in den Aufnahmeschacht 22 taucht der Einführabschnitt 50 in den ersten Ringraum 32 zwischen der Schachtwand 20 und dem Anschlussmodul 30 ein und umgibt zusammen mit dem sich an den Einführabschnitt 50 anschließenden Kragen 78 des ersten Gehäuseteils 44 den hinteren Endabschnitt des Verbindungsmoduls 94, der aus dem Anschlussmodul 30 herausragt.

Beim Einsetzen des Einführabschnitts 50 in den Aufnahmeschacht 22 kann das zweite Gehäuseteil 46 aus seiner ersten Stellung in seine zweite Stellung nach vorne verschoben und mit Hilfe des Innengewindes 90 des Verbindungsabschnitts 86 auf das Außengewinde 24 der Schachtwand 20 aufgeschraubt werden. Dadurch wird eine mechanische Verbindung zwischen dem Steckergehäuse 42 und dem Buchsengehäuse 18 hergestellt und gleichzeitig wird die formelastische Dichthülse 48 zwischen das Steckergehäuse 42 und das Kabel 56 eingepresst. Dies wird aus Figur 6 deutlich. Die Dichthülse 48 wird in axialer und in radialer Richtung verformt. Dadurch wird das Eindringen von Spritzwasser in den Innenraum des Steckergehäuses 42 verhindert. Ein weiterer Spritzwasserschutz ist durch den Dichtring 92 sichergestellt, der ein Eindringen von Spritzwasser über die miteinander zusammenwirkenden Innen- und Außengewinde 90, 24 verhindert.

Das Herstellen einer Verbindung zwischen dem Verbindungsstecker 12 und der Verbindungsbuchse 14 erfolgt somit in der Weise, dass zuerst eine signalleitende Verbindung zwischen dem Verbindungsmodul 94 und dem Anschlussmodul 30 hergestellt wird und dann das Steckergehäuse 42 mechanisch mit dem Buchsengehäuse 18 verbunden wird, wobei gleichzeitig mittels der formelastischen Dichthülse 48 ein dichter kabelseitiger Abschluss des Steckergehäuses 42 sichergestellt wird.

Soll die Verbindung zwischen dem Verbindungsstecker 12 und der Verbindungsbuchse 14 wieder gelöst werden, so kann der Monteur in einem ersten Schritt die mechanische Verbindung zwischen dem Steckergehäuse 42 und dem Buchsengehäuse 18 auftrennen, indem er die Verschraubung zwischen dem Steckergehäuse 42 und dem Buchsengehäuse 48 löst und das zweite Gehäuseteil 46 ausgehend von seiner zweiten Stellung entlang des ersten Gehäuses 44 in seine erste Stellung verschiebt. In der ersten Stellung gibt das zweite Gehäuseteil 46 die Dichthülse 48 so weit frei, dass das Steckergehäuse 42 zusammen mit der Dichthülse 48 in die der Verbindungsbuchse 14 abgewandte Richtung entlang des Kabels 46 verschoben werden kann, so dass der Monteur einen guten Zugang zum Verbindungsmodul 94 erhält und dieses vom Anschlussmodul 30 lösen kann.

Die Verbindungseinrichtung 10 eignet sich in besonderer Weise zur Verwendung an Mobilfunkantennen. Mobilfunkantennen sind starken klimatischen und mechanischen Belastungen ausgesetzt. Das Anschließen und auch das Lösen von Kabeln an entsprechenden Schaltungseinrichtungen der Mobilfunkantennen gestaltet sich mittels der erfindungsgemäßen Verbindungseinrichtung 10 trotz der widrigen Umstände recht einfach.

## Patentansprüche

1. Verbindungsstecker zur lösbaren Verbindung mit einer Verbindungsbuchse mit einem Steckergehäuse (42), an dem ein Dichtungselement (48) angeordnet ist, und mit mindestens einem Verbindungsmodul (94), das zumindest an eine Ader eines durch das Steckergehäuse (42) und das Dichtungselement (48) hindurchführbaren Kabels (56) anschließbar ist, wobei das Steckergehäuse (42) mit einem Buchsengehäuse (18) der Verbindungsbuchse (14) mechanisch verbindbar ist und wobei das Verbindungsmodul (94) mit einem Anschlussmodul (30) der Verbindungsbuchse (14) signalleitend verbindbar ist, wobei das Steckergehäuse (42) ein erstes Gehäuseteil (44) und ein relativ zum ersten Gehäuseteil (44) bewegbares zweites Gehäuseteil (46) aufweist, wobei durch Bewegen des zweiten Gehäuseteils (46) relativ zum ersten Gehäuseteil (44) das Dichtungselement (48) in Richtung auf eine Mittelachse (104) des Verbindungssteckers (12) verformbar ist, wobei das zweite Gehäuseteil (46) in einer ersten Stellung das Dichtungselement (48) so weit freigeben kann, dass es zusammen mit dem Steckergehäuse (42) entlang des Kabels (56) verschoben werden kann, und wobei das Dichtungselement (48) bei einer Bewegung des zweiten Gehäuseteils (46) in eine zweite Stellung gegen das Kabel (56) gepresst wird, **dadurch gekennzeichnet, dass** das zweite Gehäuseteil (46) das erste Gehäuseteil (44) in Umfangsrichtung umgibt unter Ausbildung eines stirnseitig offenen Ringraumes (88), in dem ein Dichtring (92) angeordnet ist, und dass das Dichtungselement (48) eine Mantelfläche (66) aufweist mit einem ersten und einem zweiten Mantelflächenabschnitt (68, 70), wobei an den Mantelflächenabschnitten (68, 70) jeweils ein Gehäuseteil (44, 46) anliegt.

2. Verbindungsstecker nach Anspruch 1, **dadurch gekennzeichnet, dass** das Dichtungselement (48) am ersten Gehäuseteil (44) festgelegt ist.

3. Verbindungsstecker nach Anspruch 1 oder 2, **dadurch gekennzeichnet, dass** das zweite Gehäuseteil (46) relativ zum ersten Gehäuseteil (44) axial verschiebbar ist.

4. Verbindungsstecker nach einem der Ansprüche 1 bis 3, **dadurch gekennzeichnet, dass** das erste Gehäuseteil (44) einen Anschlag (76) aufweist zur Begrenzung der Bewegung des zweiten Gehäuseteils (46) relativ zum ersten Gehäuseteil (44).

5. Verbindungsstecker nach einem der Ansprüche 1 bis 4, **dadurch gekennzeichnet, dass** das Dichtungselement als elastisch verformbare Dichthülse (48) ausgestaltet ist, durch die ein Endstück des Kabels (56) hindurchführbar ist und die am ersten Gehäuseteil (44) und am zweiten Gehäuseteil (46) anliegt.

6. Verbindungsstecker nach einem der Ansprüche 1 bis 5, **dadurch gekennzeichnet, dass** das Dichtungselement (48) eine erste und eine zweite Endfläche (58, 60) aufweist, wobei an den Endflächen (58, 60) jeweils ein Gehäuseteil (44, 46) anliegt.

7. Verbindungsstecker nach einem der Ansprüche 1 bis 6, **dadurch gekennzeichnet, dass** das erste Gehäuseteil (44) einen in einen Aufnahmeschacht (22) der Verbindungsbuchse (14) einführbaren Einführabschnitt (50) aufweist mit einem Anschlag (108) zum Begrenzen der Einführbewegung des Einführabschnitts (50) in den Aufnahmeschacht (22).

8. Verbindungsstecker nach einem der voranstehenden Ansprüche, **dadurch gekennzeichnet, dass** das zweite Gehäuseteil (46) dem Ringraum (88) zugewandt ein mechanisches Verbindungselement (90) aufweist zum Herstellen einer mechanischen Verbindung mit der Verbindungsbuchse (14).

9. Verbindungseinrichtung mit einem Verbindungsstecker (12) nach einem der voranstehenden Ansprüche und mit einer Verbindungsbuchse (14), die ein Buchsengehäuse (18) mit einem Aufnahmeschacht (22) aufweist, in dem ein komplementär zum Verbindungsmodul (94) ausgestaltetes Anschlussmodul (30) angeordnet ist, wobei das Verbindungsmodul (94) formschlüssig mit dem Anschlussmodul (30) verbindbar ist und wobei ein stirnseitiger Einführabschnitt (50) des ersten Gehäuseteils (44) in den Aufnahmeschacht (22) einführbar und das zweite Gehäuseteil (46) relativ zum ersten Gehäuseteil (44) bewegbar und mit dem Buchsengehäuse (18) mechanisch verbindbar ist unter gleichzeitigem Einpressen des Dichtungselements (48) zwischen das Steckergehäuse (42) und einem durch das Steckergehäuse (42) und das Dichtungselement (48) hindurchgeführten Kabel (56).

## Claims

1. Connecting plug for releasably connecting to a connecting socket having a plug housing (42) on which a sealing element (48) is arranged, and having at least one connecting module (94), which is connectable at least to a core of a cable (56) that can be passed through the plug housing (42) and the sealing element (48), wherein the plug housing (42) is mechanically connectable to a socket housing (18) of the connecting socket (14) and wherein the connecting module (94) is signal-operatively connectable to a connector module (30) of the connecting socket (14), wherein the plug housing (42) comprises a first housing part (44) and a second housing part (46) that is movable relative to the first housing part (44), wherein the sealing element (48) is deformable in the direction toward a central axis (104) of the connecting plug (12) by moving the second housing part (46) relative to the first housing part (44), wherein the second housing part (46) in a first position can unblock the sealing element (48) to such an extent that it can be displaced together with the plug housing (42) along the cable (56), and wherein the sealing element (48) is pressed against the cable (56) when the second housing part (46) is moved into a second position, **characterized in that** the second housing part (46) surrounds the first housing part (44) in the circumferential direction while forming an annular space (88), which is open on the face side and in which a sealing ring (92) is arranged, and **in that** the sealing element (48) comprises a lateral surface (66) with a first and a second lateral surface portion (68, 70), wherein a respective housing part (44, 46) abuts against each of the lateral surface portions (68, 70).

2. Connecting plug in accordance with Claim 1, **characterized in that** the sealing element (48) is fixed to the first housing part (44).

3. Connecting plug in accordance with Claim 1 or 2, **characterized in that** the second housing part (46) is axially displaceable relative to the first housing part (44).

4. Connecting plug in accordance with any one of Claims 1 to 3, **characterized in that** the first housing part (44) comprises a stop (76) for delimiting the movement of the second housing part (46) relative to the first housing part (44).

5. Connecting plug in accordance with any one of Claims 1 to 4, **characterized in that** the sealing element is configured as an elastically deformable sealing sleeve (48) through which an end piece of the cable (56) can be passed and which abuts against the first housing part (44) and against the second housing part (46).

6. Connecting plug in accordance with any one of Claims 1 to 5, **characterized in that** the sealing element (48) comprises a first and a second end face (58, 60), wherein a respective housing part (46, 46) abuts against each of the end faces (58, 60).

7. Connecting plug in accordance with any one of Claims 1 to 6, **characterized in that** the first housing part (44) comprises an insertion portion (50), which is insertable into a receiving channel (22) of the connecting socket (14), said insertion portion (50) having a stop (108) for delimiting the insertion movement of the insertion portion (50) into the receiving channel (22).

8. Connecting plug in accordance with any one of the preceding Claims, **characterized in that** the second housing part (46) comprises a mechanical connecting element (90) directed toward the annular space (88) for establishing a mechanical connection with the connecting socket (14).

9. Connecting device having a connecting plug (12) in accordance with any one of the preceding Claims and having a connecting socket (14), which comprises a socket housing (18) with a receiving channel (22) in which a connector module (30) that is formed complementary to the connecting module (94) is arranged, wherein the connecting module (94) is connectable to the connector module (30) in a positive-locking manner and wherein an insertion portion (50) on the face side of the first housing part (44) is insertable into the receiving channel (22) and the second housing part (46) is movable relative to the first housing part (44) and is mechanically connectable to the socket housing (18) while simultaneously pressing in the sealing element (48) between the plug housing (42) and a cable (56) that is passed through the plug housing (42) and the sealing element (48).

## Revendications

1. Fiche de connexion permettant une connexion amovible avec une douille de connexion avec un boîtier de fiche (42) au niveau duquel est agencé un élément d'étanchéité (48) et avec au moins un module de connexion (94) pouvant être raccordé à au moins un fil conducteur d'un câble (56) pouvant être guidé à travers le boîtier de fiche (42) et l'élément d'étanchéité (48), dans laquelle le boîtier de fiche (42) peut être connecté mécaniquement à un boîtier de fiche (18) de la douille de connexion (14) et dans laquelle le module de connexion (94) peut être connecté à un module de raccordement (30) de la douille de connexion (14) de manière à acheminer un signal, dans laquelle le boîtier de fiche (42) présente une première partie de boîtier (44) et une seconde partie de boîtier (46) mobile par rapport à la première partie de boîtier (44), dans laquelle l'élément d'étanchéité (48) peut être déformé en direction d'un axe central (104) de la fiche de connexion (12) grâce au déplacement de la seconde partie de boîtier (46) par rapport à la première partie de boîtier (44), dans laquelle la seconde partie de boîtier (46) peut, dans une première position, libérer l'élément d'étanchéité (48) pour qu'il puisse être déplacé le long du câble (56) avec le boîtier de fiche (42), et dans laquelle l'élément d'étanchéité (48) est pressé contre le câble (56) lors du déplacement de la seconde partie de boîtier (46) dans une seconde position, **caractérisée en ce que** la seconde partie de boîtier (46) entoure la première partie de boîtier (44) dans la direction périphérique en formant un espace annulaire (88) ouvert du côté frontal et au sein duquel est agencée une bague d'étanchéité (92), et **en ce que** l'élément d'étanchéité (48) présente une surface d'enveloppe (66) avec des première et seconde parties de surface d'enveloppe (68, 70), dans laquelle respectivement une partie de boîtier (44, 46) est en contact avec des parties de surface d'enveloppe (68, 70).

2. Fiche de connexion selon la revendication 1, **caractérisée en ce que** l'élément d'étanchéité (48) est fixé sur la première partie de boîtier (44).

3. Fiche de connexion selon la revendication 1 ou 2, **caractérisée en ce que** la seconde partie de boîtier (46) peut être déplacée de manière axiale par rapport à la première partie de boîtier (44).

4. Fiche de connexion selon l'une quelconque des revendications 1 à 3, **caractérisée en ce que** la première partie de boîtier (44) présente une butée (76) permettant de limiter le mouvement de la seconde partie de boîtier (46) par rapport à la première partie de boîtier (44).

5. Fiche de connexion selon l'une quelconque des revendications 1 à 4, **caractérisée en ce que** l'élément d'étanchéité est conçu sous la forme d'une douille d'étanchéité (48) élastiquement déformable à travers laquelle une pièce terminale du câble (56) peut être guidée et qui est en contact avec la première partie de boîtier (44) et la seconde partie de boîtier (46).

6. Fiche de connexion selon l'une quelconque des revendications 1 à 5, **caractérisée en ce que** l'élément d'étanchéité (48) présente des première et seconde surfaces d'extrémité (58, 60), dans laquelle respectivement une partie de boîtier (44, 46) est en contact avec les surfaces d'extrémité (58, 60).

7. Fiche de connexion selon l'une quelconque des revendications 1 à 6, **caractérisée en ce que** la première partie de boîtier (44) présente une section d'insertion (50) pouvant être insérée dans un puits de réception (22) de la douille de connexion (14), avec une butée (108) permettant de limiter le mouvement d'insertion de la section d'insertion (50) dans le puits de réception (22).

8. Fiche de connexion selon l'une quelconque des revendications précédentes, **caractérisée en ce que** la seconde partie de boîtier (46) présente un élément mécanique de connexion (90) tourné vers l'espace annulaire (88) et permettant d'établir une connexion mécanique avec la douille de connexion (14).

9. Dispositif de connexion comprenant une fiche de connexion (12) selon l'une quelconque des revendications précédentes et une douille de connexion (14) présentant un boîtier de douille (18) muni d'un puits de réception (22) au sein duquel est agencé un module de raccordement (30) conçu de manière complémentaire au module de connexion (94), dans lequel le module de connexion (94) peut être connecté par complémentarité de forme au module de raccordement (30) et dans lequel une section d'insertion (50), située du côté frontal, de la première partie de boîtier (44) peut être insérée dans le puits de réception (22) et la seconde partie de boîtier (46) peut être déplacée par rapport à la première partie de boîtier (44) et peut être connectée de manière mécanique au boîtier de douille (18) en pressant de manière simultanée l'élément d'étanchéité (48) entre le boîtier de fiche (42) et un câble (56) guidé à travers le boîtier de fiche (42) et l'élément d'étanchéité (48).
